# FASCICULE DE BREVET EUROPEEN

(11) **EP 2 814 640 B1**
(45) Date de publication et mention de la délivrance du brevet: **01.06.2016**
(21) Numéro de dépôt: 13703436.9
(22) Date de dépôt: 12.02.2013
(51) Int. Cl.: B25B 27/30, B23P 19/04, B60G 11/08

(54) **OUTILLAGE POUR LE MONTAGE D'UNE LAME DE RESSORT DE SUSPENSION AU CHASSIS ET AUX SUPPORTS DE ROUES D'UN TRAIN ROULANT D'UN VEHICULE AUTOMOBILE ET POUR SON DEMONTAGE**
WERKZEUG ZUM MONTIEREN EINER AUFHÄNGUNGS-BLATTFEDER AN DEN FAHRZEUGRAHMEN UND DEN RADTRÄGER EINER FAHRZEUGACHSE EINES KRAFTFAHRZEUGS UND ZU DESSEN DEMONTAGE
TOOLS FOR MOUNTING A SUSPENSION SPRING LEAF ON THE CHASSIS AND THE WHEEL MOUNTS OF A RUNNING GEAR OF A MOTOR VEHICLE AND FOR REMOVING SAME

(30) Priorité: 14.02.2012 FR 1251357
(43) Date de publication de la demande: 24.12.2014
(73) Titulaire: Peugeot Citroën Automobiles SA, 78140 Vélizy Villacoublay (FR); HUTCHINSON, 75384 Paris Cedex 08 (FR)
(72) Inventeur: BERTHIAS, Gilles, F-91270 Vigneux Sur Seine (FR); CIOLCZYK, Jean-Pierre, F-45200 Montargis (FR); DIAS, Jean-Paul, F-45290 Varennes (FR)
(74) Mandataire: Cabinet Plasseraud
(86) Numéro de dépôt international: PCT/EP2013/052724
(87) Numéro de publication internationale: WO 2013/120819

(56) Documents cités:
- FR-A1- 2 591 694

## Description

La présente invention revendique la priorité de la demande française 1251357 déposée le 14 février 2012.

La présente invention concerne un outillage permettant le montage d'une lame de ressort de suspension au châssis et aux supports de roues d'un train roulant d'un véhicule, notamment un véhicule automobile, ainsi que le démontage de la lame du châssis et des supports de roues.

Les lames de ressort de suspension, notamment celles formées d'une lame unique en matériau composite, sont utilisées dans des véhicules automobiles en particulier des véhicules électriques légers de ville (VeIV) pour assurer le maintien vertical de la caisse du véhicule et le filtrage des inégalités de la route.

De telles lames sont plus ou moins fortement courbées dans leur plan de symétrie longitudinale et il est alors nécessaire de les redresser lors de leur montage sur le train roulant, avant ou arrière, du véhicule afin d'assurer leur fixation au châssis et aux supports de roues.

On connait un outillage permettant d'appliquer et maintenir sur la partie centrale de la lame de ressort de suspension une précontrainte de modification de la courbure de la lame à laquelle celle-ci peut être fixée au châssis et aux supports de roues.

Cet outillage comprend une poutre rigide et au moins un serre-joint permettant de brider la lame sur la poutre en maintenant sur la partie centrale de la lame la précontrainte de modification de sa courbure et cet ensemble est présenté sous le véhicule pour fixer la partie centrale de la lame au châssis et les extrémités de la lame aux supports de roues. Ensuite, le serre-joint est desserré pour libérer la lame et la poutre rigide est retirée du véhicule.

Le démontage de la lame du châssis et des supports de roues s'opère en effectuant les opérations inverses à l'aide de la poutre rigide et du serre-joint.

Cependant, l'opération de montage ou de démontage de la lame de ressort de suspension est extrêmement risquée du fait que pendant la manipulation de l'ensemble à poutre rigide et serre-joint, ce dernier peut se désolidariser de la poutre rigide, occasionnant une détente brutale de la lame pouvant provoquer un accident grave à l'opérateur. En outre, le montage ou démontage de la lame nécessite une certaine habileté de la part de l'opérateur et exige un volume d'espace relativement important sous le véhicule pour positionner le ou les serre-joints et la poutre rigide qui est relativement lourde, de l'ordre de 300 Newtons. Enfin, cet outillage connu est relativement encombrant et nécessite un espace de rangement adapté.

Le document FR 2 591 694 révèle également un outillage permettant le montage d'une lame de ressort de suspension au châssis et aux supports de roues d'un train roulant d'un véhicule.

Cet outillage connu comprend un socle aux extrémités duquel sont prévus des supports de glissement, un étrier pouvant être amoviblement fixé sur le socle et comportant un vérin permettant d'appliquer sur la partie centrale de la lame une précontrainte de modification de la courbure de la lame, et des moyens à broches permettant de maintenir la lame à sa position précontrainte sur le socle de façon que la lame puisse être fixée au châssis et aux supports de roues.

Cet outillage connu présente les mêmes inconvénients que celui précédemment décrit, à savoir qu'il nécessite un volume vertical sous le véhicule relativement important à cause de la présence du vérin de l'étrier et est d'une structure relativement complexe, lourde et encombrante nécessitant un espace de rangement de l'ensemble à socle et vérin pour une opération ultérieure de montage ou de démontage d'une lame de ressort de suspension.

La présente invention a pour but de pallier les inconvénients ci-dessus des outillages connus.

A cet effet, selon l'invention, l'outillage permettant le montage d'une lame de ressort de suspension au châssis et aux supports de roues d'un train roulant d'un véhicule, notamment un véhicule automobile, ainsi que le démontage de la lame du châssis et des supports de roues, est du type comprenant une structure rigide de support de la lame à un état libre, non contrainte, auquel la lame présente une courbure dans son plan de symétrie longitudinal et des moyens de bridage amoviblement fixés à la structure de support aptes à appliquer et maintenir sur la partie centrale de la lame une précontrainte de modification de la courbure de la lame à laquelle la lame peut être fixée au châssis et aux supports de roues avant de retirer les moyens de bridage, est caractérisé en ce qu'en position de montage de la lame au châssis et aux supports de roues, la structure rigide de support de la lame est amoviblement fixée au châssis du véhicule pour former un berceau de support de la lame.

De préférence, la structure rigide de support de la lame est constituée par un cadre rectangulaire apte à supporter la lame transversalement par rapport à l'axe longitudinal du véhicule lorsque le cadre est fixé au châssis du véhicule.

Avantageusement, la lame est supportée au cadre par deux axes rigides cylindriques s'étendant entre deux côtés parallèles du cadre transversalement à ceux-ci et traversant la lame transversalement à celle-ci de manière à constituer des axes de rotation autour desquels peut pivoter la lame dont la partie centrale s'étend entre les deux axes cylindriques.

Les deux axes cylindriques sont fixés rigidement par leurs extrémités aux deux côtés parallèles du cadre s'étendant transversalement par rapport à l'axe longitudinal du véhicule lorsque le cadre est fixé au châssis du véhicule.

De préférence, les moyens de bridage comprennent une pièce en étrier amoviblement fixée à l'un des deux côtés parallèles du cadre en ayant l'une de ses branches, qui fait saillie de ce côté parallèlement à ce dernier, conformée en chape, un bras de levier monté pivotant à la chape, et un organe permettant le pivotement contrôlé du bras de levier pour qu'il applique sur la partie centrale de la lame, lorsque le cadre est fixé au châssis du véhicule, la précontrainte de modification de la courbure de la lame permettant la fixation des extrémités de la lame aux supports de roues par l'intermédiaire d'articulations.

Avantageusement, l'organe de contrôle du pivotement du bras de levier comprend une vis ancrée au travers d'une patte solidaire du bras de levier à l'opposé de l'extrémité libre de ce bras, l'extrémité libre de la vis étant en appui sur la branche conformée en chape et en-dessous de l'axe de pivotement.

L'invention vise également un procédé de montage d'une lame de ressort de suspension au châssis et aux supports de roues d'un train roulant d'un véhicule, notamment un véhicule automobile, ainsi que de démontage de la lame du châssis et des supports de roues, utilisant l'outillage tel que défini précédemment et qui est caractérisé en ce qu'il consiste à monter la lame sur la structure de support à un état libre, non contrainte, auquel la lame présente une courbure dans son plan de symétrie longitudinale, amoviblement fixer la structure de support de la lame au châssis du véhicule, amoviblement fixer les moyens de bridage sur la structure de support de la lame à un emplacement relatif leur permettant d'appliquer et de maintenir sur la partie centrale de la lame une précontrainte de modification de la courbure de la lame à laquelle la lame peut être fixée par ses extrémités aux supports de roues, et retirer les moyens de bridage de la structure de support après avoir fixé les extrémités de la lame aux supports de roues.

L'invention vise enfin un véhicule, tel qu'un véhicule automobile, qui est caractérisé en ce qu'il est équipé d'un berceau de support d'une lame de ressort de suspension amoviblement fixé au châssis du véhicule comme défini précédemment.

Avantageusement, le train roulant du véhicule est le train avant de celui-ci.

En outre, la lame de ressort de suspension est en matériau composite.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue dans un plan transversal et vertical d'un train roulant d'un véhicule suivant l'invention ;
- la figure 2 est une vue en perspective représentant une première étape de montage d'une lame de ressort de suspension du véhicule à un cadre de support faisant partie de l'outillage de l'invention ;
- la figure 3 représente en perspective une seconde étape de fixation du cadre de la figure 2 à la caisse du véhicule ;
- les figures 4 à 6 sont des vues schématiques de côté représentant le montage de moyens de bridage au cadre de la figure 2 et faisant partie de l'outillage de l'invention ;
- la figure 7 est une vue en perspective semblable à celle de la figure 3 et représentant les moyens de bridage de la figure 6 montés au cadre de support ;
- la figure 8 est une vue schématique de côté semblable à celle de la figure 6 et montrant la manoeuvre d'un organe de contrôle pour permettre le cintrage de la lame de ressort de suspension suivant une contrainte prédéterminée ;
- la figure 9 est une vue en perspective semblable à celle de la figure 7 et représentant également le cintrage de la lame de ressort de suspension sous la contrainte prédéterminée ;
- la figure 10 est une vue du train roulant de la figure 1 avant le retrait des moyens de bridage du cadre de support de la lame de ressort de suspension ;
- la figure 11 est une vue de face de la lame dans sa position cintrée de la figure 9 ; et
- la figure 12 est une vue en coupe suivant la ligne XII-XII de la figure 9.

En se reportant aux figures, la référence 1 désigne un train roulant d'un véhicule, tel qu'un véhicule automobile, qui est ici un train avant de ce véhicule, étant bien entendu que ce train roulant peut être également un train arrière.

Le train avant 1 comprend une lame inférieure 2 formant les deux bras inférieurs de suspension 21 du train avant et également le ressort de la suspension.

Chaque bras inférieur 21 de la lame 2 est prolongé à son extrémité libre par une articulation 32 servant de point de liaison inférieur à un support 3 d'une roue 4.

Les supports de roues 3 servent également de supports à des amortisseurs 5 reliés au châssis 6 du véhicule.

La lame 2 est constituée en un matériau composite, qui s'étend transversalement par rapport à la direction longitudinale du véhicule lorsque fixée au châssis 6 de celui-ci comme on le verra ultérieurement et présente une courbure dans son plan de symétrie longitudinale.

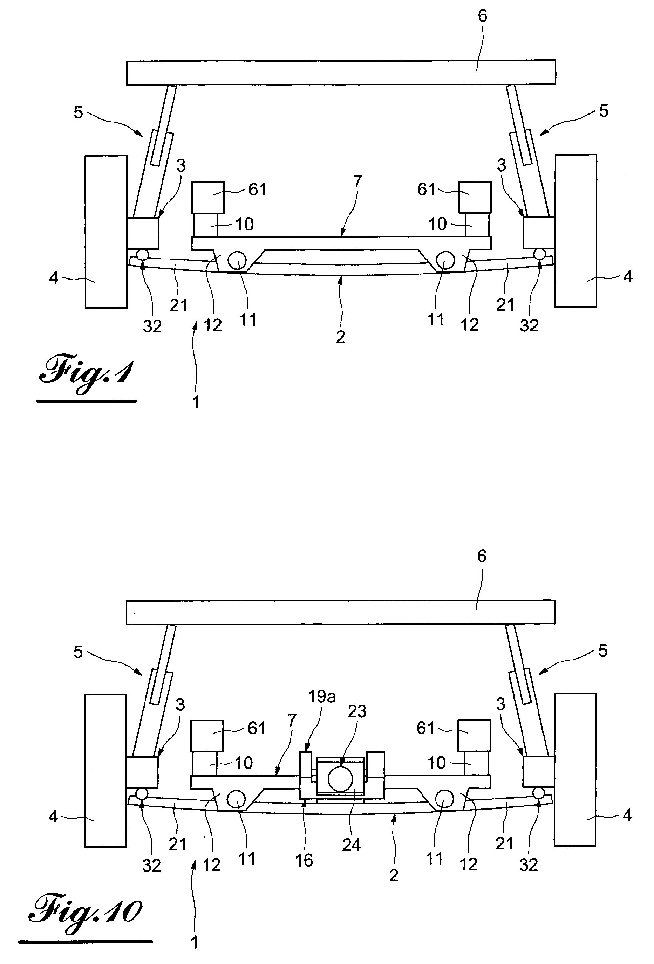

La figure 1 montre ainsi que la courbure de la lame 2 à sa position de fixation aux supports 3 de roues 4 et au châssis 6 présente une convexité dirigée vers le bas, c'est-à-dire vers la route.

Selon l'invention, la lame 2 est fixée au châssis 6 du véhicule par l'intermédiaire d'une structure rigide de support 7 amoviblement fixée au châssis 6 pour constituer un berceau de support de la lame 2.

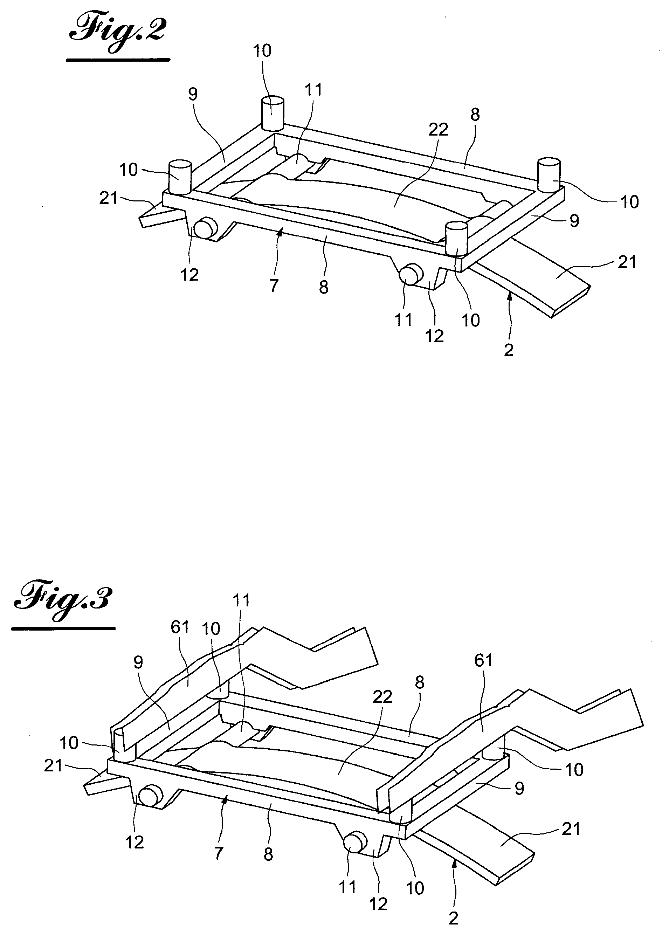

En se reportant notamment aux figures 2, 3, 7 et 9, le berceau 7 est de préférence constitué par un cadre rigide rectangulaire apte à supporter la lame 2 transversalement par rapport à l'axe longitudinal du véhicule lorsque le cadre 7 est fixé au châssis 6 du véhicule.

Le cadre 7 comporte ainsi deux côtés parallèles 8 constituant respectivement deux poutrelles rigides destinées à s'étendre transversalement à la direction longitudinale du véhicule en position de montage au châssis 6 du véhicule et deux autres côtés parallèles 9, perpendiculaires aux côtés 8 formés par deux poutrelles rigides destinées à constituer des longerons s'étendant parallèlement à la direction longitudinale du véhicule. Dans l'exemple représenté, les poutrelles 8, 9 présentent en section transversale la forme rectangulaire, mais elles peuvent être constituées par des profilés par exemple en I.

Le cadre 7 peut être fixé au châssis 6 du véhicule au niveau de ses quatre coins par des vis de fixation, non représentées, traversant des manchons 10 solidaires respectivement des quatre coins du cadre 7 et ancrées dans des éléments de structure 61 du châssis 6 du véhicule.

La lame 2 est fixée au cadre 7 par l'intermédiaire de deux tiges cylindriques 11 solidaires des deux poutrelles parallèles 8 du cadre 7 perpendiculairement à celles-ci et traversant la lame 2 transversalement à cette dernière de manière à constituer des axes de rotation autour desquels peut pivoter la lame 2.

Chaque tige 11 est rigidement fixée par ses deux extrémités sous le cadre 7 respectivement aux deux poutrelles 8. A titre d'exemple non limitatif, chaque extrémité de la tige 11 est fixée sous la poutrelle correspondante 8 par l'intermédiaire d'une bride de fixation 12, les vis de fixation de la bride 12 à la poutrelle 8 n'étant pas représentées pour la simplicité.

Pour permettre à la lame 2 de pivoter autour des axes de rotation constitués par les deux tiges 11, différentes solutions sont possibles.

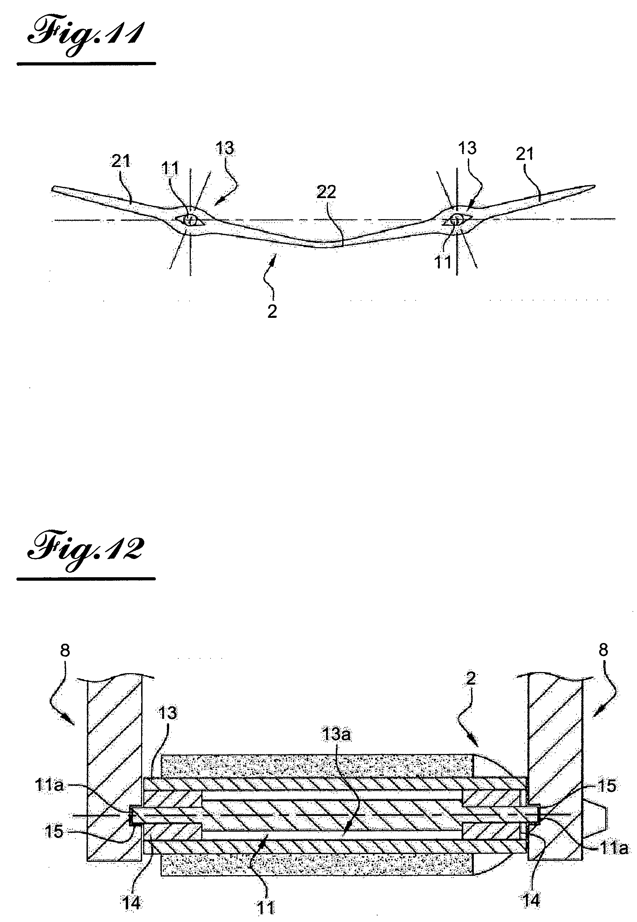

L'une d'elles est décrite dans la demande de brevet français FR 2 958 215 et va être décrite en référence aux figures 11 et 12.

Ces figures montrent que la lame 2 comprend deux inserts 13 pris en sandwich dans l'épaisseur de la lame et positionnés symétriquement de part et d'autre de son axe de symétrie s'étendant transversalement à la direction longitudinale de la lame.

Les inserts 13 servent de palier aux deux tiges 11, chaque tige 11 dépassant de chaque côté de l'insert pour former les deux extrémités de la tige servant de points de fixation de la lame 2 aux poutrelles 8 du cadre de support 7. Pour recevoir la tige 11, une ouverture cylindrique 13a est ménagée dans l'insert 13 et un manchon en élastomère 14 est positionné dans l'ouverture 13a, entourant la tige 11.

Les deux inserts 13 délimitent la lame 2 en trois parties, une première partie centrale 22 prolongée de chaque côté par deux parties latérales formant les deux bras inférieurs 21 du train avant 1.

La figure 12 montre l'un des inserts 13 et une autre variante de réalisation permettant de fixer les extrémités 11 a d'une des tiges 11 entre les deux poutrelles 8 du cadre berceau 7. Ainsi, les deux extrémités 11a de la tige 11 sont fixées respectivement dans deux logements 15 constitués par des trous borgnes formés respectivement dans les deux poutrelles 8 du cadre 7, solidarisant ainsi la lame 2 à ce cadre. La figure 12 montre également que la tige 11 présente, en sa partie centrale, une section de plus grand diamètre formant deux épaulements de chaque côté de cette partie centrale, contre lesquels sont positionnés en butée les deux manchons en élastomère 14.

Des moyens de bridage sont également prévus pour assurer le montage de la lame 2 au train avant 1 et le démontage de la lame de ce train.

Ces moyens de bridage comprennent une pièce en étrier 16 pouvant être amoviblement fixée sur l'une des poutrelles 8 du cadre 7 le long de celle-ci. De préférence, la pièce en étrier 16 est montée par emboitement sur la poutrelle 8 du cadre 7. Plus précisément, la pièce en étrier 16 a l'une de ses branches 17 destinée à s'étendre parallèlement le long du côté interne au cadre 7 de la poutrelle 8 pourvue d'un rebord 18 apte à venir en appui sur la face supérieure de la poutrelle 8 de manière à emprisonner la partie de poutrelle 8 entre les deux branches 17, 19 de la pièce en étrier 16 pour maintenir cette pièce à la poutrelle 8.

Les moyens de bridage comprennent en outre un bras de levier 20 monté pivotant dans une chape 19a formée dans la branche 19 de la pièce en étrier 16 en ayant son axe d'articulation 19b situé au-dessus de la poutrelle 8 parallèlement à celle-ci.

Le bras de levier 20 comprend un première partie rectiligne 20a montée articulée à la chape 21 de part et d'autre de l'axe d'articulation 19b et qui est prolongé par une seconde partie rectiligne inclinée 20b dont l'extrémité libre est biseautée. Ainsi, le bras de levier 20 peut pivoter relativement à la chape 21 de la pièce en étrier 16 dans un plan perpendiculaire à la poutrelle 8.

Les moyens de bridage comprennent enfin un organe 23 permettant le pivotement contrôlé du bras de levier 20. De préférence, l'organe 23 comporte une vis traversant une paroi d'extrémité 24 formant patte de la partie 20a du bras de levier 20 et qui s'étend sensiblement perpendiculairement à cette paroi d'extrémité en regard de la branche 19 de la pièce en étrier 16. La vis 23 peut venir en appui par son extrémité libre sur la face externe de la branche 19 de la pièce en étrier 16 et en-dessous de l'axe de pivotement 19b pour provoquer le pivotement du bras de levier 20 comme on le verra ultérieurement.

Le montage de la lame 2 au train avant 1 s'opère comme suit.

Tout d'abord, la lame 2 pourvue de ses deux tiges transversales 11 est montée à l'état libre, c'est-à-dire non contrainte, au cadre de support 7, en dehors du véhicule, en fixant les extrémités libres des tiges 11 sous les deux poutrelles 8 perpendiculairement à celles-ci par les brides de fixation 12 comme représenté en figure 2. Ainsi, la lame 2 a son plan de symétrie longitudinale s'étendant parallèlement aux poutrelles 8 dans le plan médian du cadre 7 et à son état libre, elle présente une courbure dans son plan de symétrie longitudinale ayant une convexité dirigée vers l'ouverture du cadre 7. La partie centrale 22 de la lame 2 est située entre les deux tiges 11.

Ensuite, comme représenté en figure 3, le cadre 7 de support de la lame 2 est fixé aux éléments de structure 61 du châssis 10 du véhicule par les vis de fixation traversant les manchons 10 du cadre 7 de façon que les poutrelles 8 du cadre 7 s'étende transversalement par rapport à la direction longitudinale du véhicule.

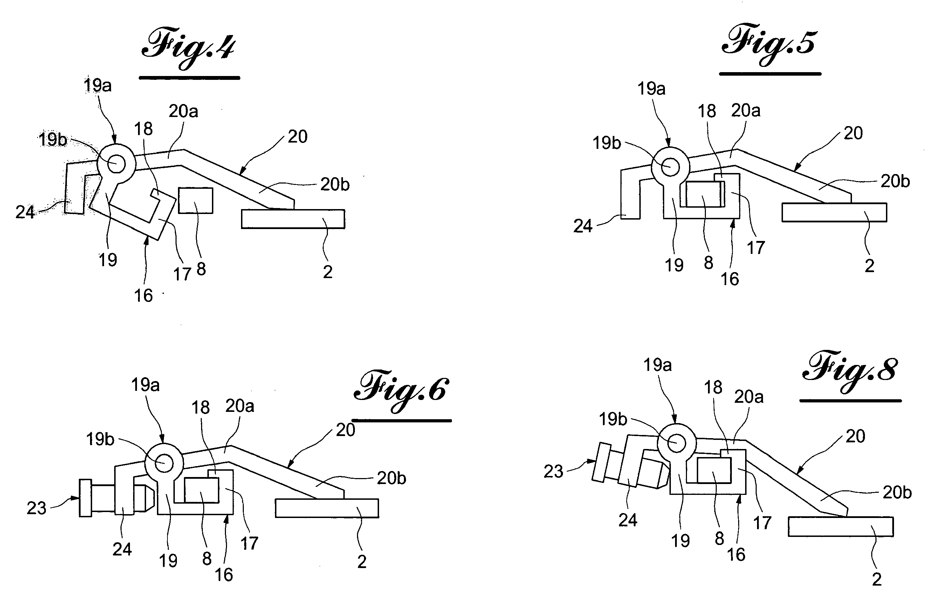

Après fixation du cadre 7 au châssis 6 du véhicule, les moyens de bridage comprenant la pièce en étrier 16 et le bras de levier 20 sont montés sur la poutrelle correspondante 8 du cadre 7 par emboitement de la pièce en étrier 16 sur cette poutrelle comme représenté aux figures 4 et 5 de manière que le bras de levier 20 s'étende transversalement à la lame 2 en ayant son extrémité libre située au-dessus de la partie centrale 22 de cette lame dont les deux parties latérales 21 s'étendent de part et d'autre des poutrelles 9 du cadre 7, sous celles-ci.

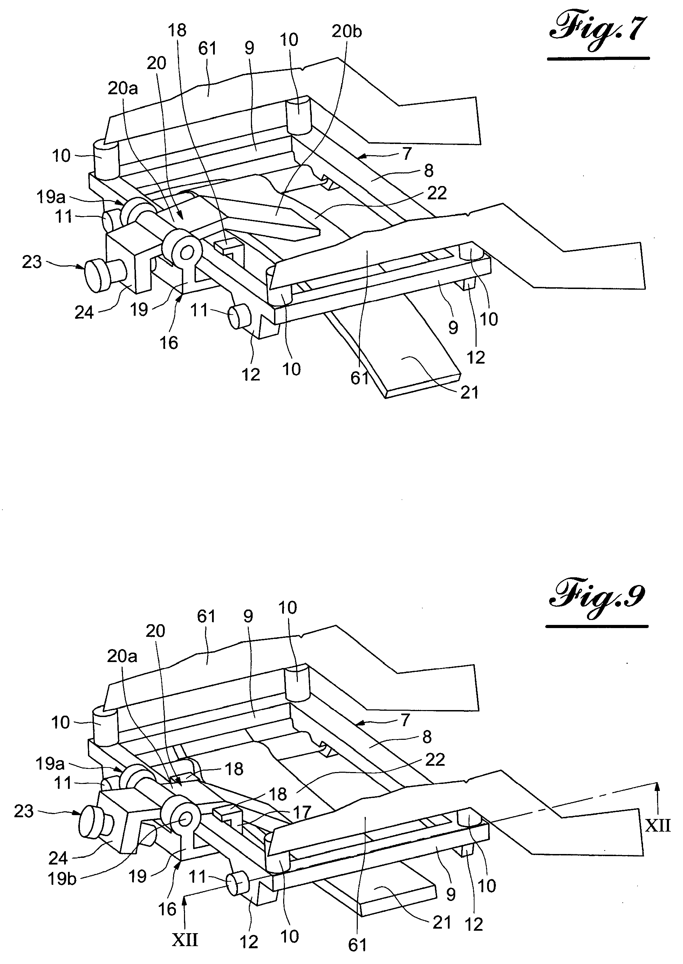

Ensuite, la vis 23 est montée au travers de la paroi 24 du bras de levier 20 opposée à son extrémité libre comme représenté en figure 6 et, comme représenté en figure 8, la vis 23 est manoeuvrée dans le sens du serrage pour provoquer le basculement du bras de levier 20 relativement à la chape 21 de la pièce en étrier 16 de manière que l'extrémité libre de ce bras de levier exerce sur la partie centrale 22 de la lame 2 une précontrainte de modification de la courbure de cette lame comme visible en figure 9, précontrainte maintenue par la vis 23 en appui sur la face externe de la branche 19 de la pièce en étrier 16 empêchant le basculement en sens contraire du bras de levier 20. Il est à noter que la branche 17 et son rebord 18 sont évidés centralement pour permettre le basculement vers la lame 2 du bras de levier 20 et le cintrage vers le bas de cette lame.

La figure 9 montre que la modification de courbure de la lame 2 s'est traduite par une inversion de courbure relativement à celle de la figure 7, c'est-à-dire que la partie centrale 22 de la lame 2 en figure 9 présente une convexité dirigée vers le bas.

La modification par déformation élastique de la courbure de la lame 2 de sa position représentée en figure 7 à sa position représentée en figure 9 par les moyens de bridage s'effectue par pivotement des inserts 13 de la lame 2 autour des axes de rotation constitués par les deux tiges 11.

La figure 10 montre que les extrémités des deux parties latérales 21 de la lame 2 sont alors fixées par leurs articulations 32 aux supports de roues 3.

Une fois cette fixation effectuée, la vis 23 est dévissée et l'ensemble à pièce en étrier 16 et bras de levier 20 est retiré de la poutrelle correspondante 8 du cadre 7 de sorte que la lame 2 est fixée au châssis 6 par l'intermédiaire du cadre 7 et aux supports de roues 3 comme représenté en figure 1. Les figures 9 et 10 montrent que la précontrainte appliquée à la lame 2, avant son montage, est sensiblement égale à la charge qu'elle aura à supporter au repos.

L'opération de démontage de la lame 2 du châssis 6 et des supports de roues 3 s'effectuera suivant un processus inverse à celui décrit pour le montage de cette lame. Ainsi, il suffira de monter à nouveau les moyens de bridage sur la poutrelle 8 du cadre 7 et, par vissage de la vis 23, de faire pivoter le bras de levier 20 pour amener son extrémité libre en appui sur la partie centrale 22 de la lame 2. Ensuite, les articulations 32 des extrémités de la lame 2 sont démontées des supports de roues et le cadre 7 est ensuite démonté des éléments de structure 61 du châssis 6. Une fois le cadre 7 et la lame 2 retirés du châssis 6, la vis 23 est desserrée, ce qui provoque la déformation élastique de la lame 2 pour que sa courbure passe de sa position de la figure 9 à celle de la figure 7 et les moyens de bridage sont ensuite retirés du cadre 7. Les tiges 11 de la lame 2 peuvent alors être démontées du cadre 7 et permettre son remplacement éventuel par une autre lame à tige d'articulation 11.

Le cadre 7, qui fait partie de l'outillage de montage et de démontage de la lame 2 assure en position de montage la fonction de berceau de support et de fixation de la lame 2 au train avant 1 du véhicule. L'outillage de l'invention assure un montage et un démontage extrêmement faciles, est léger et peu encombrant puisque seuls les moyens de bridage, peu encombrants par rapport aux poutres rigides utilisées dans les outillages connus, doivent être rangés. L'outillage de l'invention permet le montage et le démontage de la lame en toute sécurité sans risque d'accident ou de blessure lors des manipulations contrairement aux outillages antérieurement connus utilisant des serre-joints. L'outillage prend peu de place en volume vertical sous le train roulant. Enfin, l'outillage de l'invention permet un gain de temps de montage et de démontage non seulement en usine mais également en garage lors d'opérations de maintenance et, le cas échéant, de remplacement de la lame de ressort de suspension.

## Revendications

1. Outillage permettant le montage d'une lame de ressort de suspension (2) au châssis (6) et aux supports de roues (3) d'un train roulant (1) d'un véhicule, notamment un véhicule automobile, ainsi que le démontage de la lame (2) du châssis (6) et des supports de roues (3), comprenant une structure rigide de support (7) de la lame (2) à un état libre, non contrainte, auquel la lame (2) présente une courbure dans son plan de symétrie longitudinale et des moyens de bridage (16,20,23) amoviblement fixés à la structure de support (7) aptes à appliquer et maintenir sur la partie centrale (22) de la lame (2) une précontrainte de modification de la courbure de la lame (2) à laquelle la lame (2) peut être fixée au châssis (6) et aux supports de roues (3) avant de retirer les moyens de bridage (16,20,23), **caractérisé en ce qu'**en position de montage de la lame (2) au châssis (6) et aux supports de roues (3), la structure rigide de support (7) de la lame (2) est amoviblement fixée au châssis (6) du véhicule pour former un berceau de support de la lame (2).

2. Outillage selon la revendication 1, **caractérisé en ce que** la structure rigide de support de la lame est constituée par un cadre rectangulaire (7) apte à supporter la lame (2) transversalement par rapport à l'axe longitudinal du véhicule lorsque le cadre (7) est fixé au châssis (6) du véhicule.

3. Outillage selon la revendication 2, **caractérisé en ce que** la lame (2) est supportée au cadre (7) par deux axes rigides cylindriques (11) s'étendant entre deux côtés parallèles (8) du cadre (7) transversalement à ceux-ci et traversant la lame (2) transversalement à celle-ci de manière à constituer des axes de rotation autour desquels peut pivoter la lame (2) dont la partie centrale (22) s'étend entre les deux axes cylindriques (11).

4. Outillage selon la revendication 3, **caractérisé en ce que** les deux axes cylindriques (11) sont fixés rigidement par leurs extrémités aux deux côtés parallèles (8) du cadre (7) s'étendant transversalement par rapport à l'axe longitudinal du véhicule lorsque le cadre (7) est fixé au châssis (6) du véhicule.

5. Outillage selon l'une quelconque des revendications 2 à 4, **caractérisé en ce que** les moyens de bridage (16,20,23) comprennent une pièce en étrier (16) amoviblement fixée à l'un des deux côtés parallèles (8) du cadre (7) en ayant l'une de ses branches (19), qui fait saillie de ce côté parallèlement à ce dernier, conformée en chape (21), un bras de levier (20) monté pivotant à la chape (21) et un organe (23) permettant le pivotement contrôlé du bras de levier (20) pour qu'il applique sur la partie centrale (22) de la lame (2), lorsque le cadre (7) est fixé au châssis (6) du véhicule, la précontrainte de modification de la courbure de la lame (2) permettant la fixation des extrémités de la lame (2) aux supports de roues (3) par l'intermédiaire d'articulations (32).

6. Outillage selon la revendication 5, **caractérisé en ce que** l'organe de contrôle du pivotement du bras de levier (20) comprend une vis (23) ancrée au travers d'une patte (24) solidaire du bras de levier (20) à l'opposé de l'extrémité libre du bras (20), l'extrémité libre de la vis étant en appui sur la branche conformée en chape (21) et en-dessous de l'axe de pivotement.

7. Procédé de montage d'une lame de ressort de suspension (2) au châssis (6) et aux supports de roues (3) d'un train roulant (1) d'un véhicule, notamment un véhicule automobile, ainsi que de démontage de la lame (2) du châssis (6) et des supports de roues (3), utilisant l'outillage tel que défini dans l'une quelconque des revendications 1 à 6, **caractérisé en ce qu'**il consiste à monter la lame (2) sur la structure de support (7) à un état libre, non contrainte, auquel la lame (2) présente une courbure dans son plan de symétrie longitudinale, amoviblement fixer la structure de support (7) de la lame (2) au châssis (6) du véhicule, amoviblement fixer les moyens de bridage (16,20,23) sur la structure de support (7) de la lame (2) à un emplacement relatif leur permettant d'appliquer et de maintenir sur la partie centrale (22) de la lame (2) une précontrainte de modification de la courbure de la lame (2) à laquelle la lame (2) peut être fixée par ses extrémités aux supports de roues (3), et retirer les moyens de bridage (16,20,23) de la structure de support (7) de la lame après avoir fixé les extrémités de la lame (2) aux supports de roues (3).

## Patentansprüche

1. Werkzeug, welches die Montage einer Aufhängungs-Blattfeder (2) an dem Chassis (6) und den Radträgern (3) eines Fahrwerks (1) eines Fahrzeugs, insbesondere eines Kraftfahrzeugs, sowie die Demontage der Feder (2) von dem Chassis (6) und den Radträgern (3) erlaubt, umfassend eine steife Tragestruktur (7) der Feder (2) in einem freien, nicht belasteten Zustand, wobei die Feder (2) eine Krümmung in ihrer longitudinalen Symmetrieebene ausweist, und Spannmittel (16, 20, 23), welche lösbar an der Tragestruktur (7) befestigt sind, welche in der Lage sind, auf den zentralen Teil (22) der Feder (2) eine Vorspannung zur Modifikation der Krümmung der Feder (2) einzuwirken und aufrechtzuerhalten, durch welche die Feder (2) an dem Chassis (6) und den Radträgern (3) befestigt werden kann, bevor die Spannmittel (16, 20, 23) entfernt werden, **dadurch gekennzeichnet, dass** in einer Montageposition der Feder (2) an dem Chassis (6) und den Radträgern (3) die steife Tragestruktur (7) der Feder (2) lösbar an dem Chassis (6) des Fahrzeugs befestigt ist, um eine Tragewiege der Feder (2) zu bilden.

2. Werkzeug nach Anspruch 1, **dadurch gekennzeichnet, dass** die steife Tragestruktur der Feder durch einen rechteckigen Rahmen (7) gebildet ist, welcher in der Lage ist, die Feder (2) transversal bezüglich der longitudinalen Achse des Fahrzeugs zu tragen, wenn der Rahmen (7) an dem Chassis (6) des Fahrzeugs befestigt ist.

3. Werkzeug nach Anspruch 2, **dadurch gekennzeichnet, dass** die Feder (2) an dem Rahmen (7) durch zwei steife zylindrische Achsen (11) getragen ist, welche sich zwischen zwei parallelen Seiten (8) des Rahmens (7) transversal zueinander erstrecken und die Feder (2) transversal dazu derart überqueren, dass Rotationsachsen gebildet werden, um welche die Feder (2) schwenken kann, wobei sich der zentrale Abschnitt (22) zwischen den beiden zylindrischen Achsen (11) erstreckt.

4. Werkzeug nach Anspruch 3, **dadurch gekennzeichnet, dass** die beiden zylindrischen Achsen (11) mittels ihrer Enden an zwei parallelen Seiten (8) des Rahmens (7) starr befestigt sind, welche sich transversal bezüglich der longitudinalen Achse des Fahrzeugs erstrecken, wenn der Rahmen (7) an dem Chassis (6) des Fahrzeugs befestigt ist.

5. Werkzeug nach einem der Ansprüche 2 bis 4, **dadurch gekennzeichnet, dass** die Spannmittel (16, 20, 23) ein Bügelstück (16) umfassen, welches lösbar an einer der beiden parallelen Seiten (8) des Rahmens (7) befestigt ist, wobei einer seiner Zweige (19), welcher an seiner Hinterseite über diese parallele Seite übersteht, in Form eines Gabelkopfs (21) gebildet ist, ein Hebelarm (20) schwenkbar an dem Gabelkopf (21) montiert ist und ein Element (23) das gesteuerte Schwenken des Hebelarms (20) ermöglicht, um so auf den zentralen Teil (22) der Feder (2), wenn der Rahmen (7) an dem Chassis (6) des Fahrzeugs befestigt ist, die Vorspannung zum Modifizieren der Krümmung der Feder (2) einzuwirken, wobei das Befestigen der Enden der Feder (2) an den Radträgern (3) mittels Gelenken (32) ermöglicht wird.

6. Werkzeug nach Anspruch 5, **dadurch gekennzeichnet, dass** das Element zum Steuern des Schwenkens des Hebelarms (20) eine Schraube (23) umfasst, welche durch eine Ausnehmung (24) verankert ist, welche mit dem Hebelarm (20) gegenüber dem freien Ende des Arms (20) verbunden ist, wobei das freie Ende der Schraube gegen den als Gabelkopf (21) gebildeten Zweig und unterhalb der Schwenkachse anliegt.

7. Verfahren zum Montieren einer Aufhängungs-Blattfeder (2) an dem Chassis (6) und den Radträgern (3) eines Fahrwerks (1) eines Fahrzeugs, insbesondere eines Kraftfahrzeug, sowie zum Demontieren der Feder (2) von dem Chassis (6) und den Radträgern (3) unter Verwendung des Werkzeugs nach einem der Ansprüche 1 bis 6, **dadurch gekennzeichnet, dass** es darin besteht, die Feder (2) an der Tragestruktur (7) in einem freien, nicht belasteten Zustand zu montieren, in welchem die Feder (2) eine Krümmung in ihrer longitudinalen Symmetrieebene aufweist, die Tragestruktur (7) der Feder (2) an dem Chassis (6) des Fahrzeugs lösbar zu befestigen, die Spannmittel (16, 20, 23) an der Tragestruktur (7) der Feder (2) an einer entsprechenden Stelle lösbar zu befestigen, welche es ermöglicht, auf den zentralen Teil (22) der Feder eine Vorspannung zum Modifizieren der Krümmung der Feder (2) einzuwirken und aufrechtzuerhalten, wodurch die Feder (2) mit ihren Enden an den Radträgern (3) befestigt werden kann, und die Spannmittel (16, 20, 23) der Tragestruktur (7) der Feder zu entfernen, nachdem die Enden der Feder (2) an den Radträgern (3) befestigt worden sind.

## Claims

1. Tool enabling a suspension spring leaf (2) to be mounted on the chassis (6) and on the wheel mounts (3) of a running gear (1) of a vehicle, in particular an automotive vehicle, and enabling the leaf (2) to be removed from the chassis (6) and from the wheel mounts (3), comprising a rigid structure (7) for supporting the leaf (2) in a free, unconstrained state in which the leaf (2) has a curvature in its longitudinal plane of symmetry, and clamping means (16, 20, 23) removably secured to the support structure (7) able to apply and maintain on the central part (22) of the leaf (2) a pre-tensioning force to modify the curvature of the leaf (2) at which the leaf (2) can be secured to the chassis (6) and to the wheel mounts (3) before removing the clamping means (16, 20, 23), **characterised in that** in a position in which the leaf (2) is mounted on the chassis (6) and on the wheel mounts (3), the rigid support structure (7) of the leaf (2) is removably secured to the chassis (6) of the vehicle to form a supporting cradle for the leaf (2).

2. Tool as claimed in claim 1, **characterised in that** the rigid support structure of the leaf consists of a rectangular frame (7) able to support the leaf (2) transversely to the longitudinal axis of the vehicle when the frame (7) is secured to the chassis (6) of the vehicle.

3. Tool as claimed in claim 2, **characterised in that** the leaf (2) is supported on the frame (7) by two cylindrical rigid shafts (11) extending between and transversely to two parallel sides (8) of the frame (7) and extending across the leaf (2) transversely thereto so as to form axes of rotation about which the leaf (2) can pivot, the central part (22) thereof extending between the two cylindrical shafts (11).

4. Tool as claimed in claim 3, **characterised in that** the two cylindrical shafts (11) are rigidly secured by their ends to the two parallel sides (8) of the frame (7) extending transversely to the longitudinal axis of the vehicle when the frame (7) is secured to the chassis (6) of the vehicle.

5. Tool as claimed in any one of claims 2 to 4, **characterised in that** the clamping means (16, 20, 23) comprise a stirrup piece (16) removably secured to one of the two parallel sides (8) of the frame (7), one of its branches (19) which protrudes out from this side parallel therewith being shaped as a clevis (21), a lever arm (20) pivotally mounted on the clevis (21) and a member (23) enabling the controlled pivoting movement of the lever arm (20) so that it applies to the central part (22) of the leaf (2), when the frame (7) is secured to the chassis (6) of the vehicle, the pre-tensioning force modifying the curvature of the leaf (2) enabling the ends of the leaf (2) to be secured to the wheel mounts (3) by means of articulations (32).

6. Tool as claimed in claim 5, **characterised in that** the member for controlling the pivoting movement of the lever arm (20) comprises a screw (23) anchored through a foot (24) integral with the lever arm (20) opposite the free end of the arm (20), the free end of the screw pressing against the branch forming a clevis (21) and underneath the pivoting axis.

7. Method of mounting a suspension spring leaf (2) on the chassis (6) and on the wheel mounts (3) of a running gear (1) of a vehicle, in particular an automotive vehicle, and for removing the leaf (2) from the chassis (6) and from the wheel mounts (3) using the tool as defined in any one of claims 1 to 6, **characterised in that** it consists in mounting the leaf (2) on the support structure (7) in a free, unconstrained state in which the leaf (2) has a curvature in its longitudinal plane of symmetry, removably securing the support structure (7) of the leaf (2) to the chassis (6) of the vehicle, removably securing the clamping means (16, 20, 23) on the support structure (7) of the leaf (2) in a relative position enabling them to apply and maintain on the central part (22) of the leaf (2) a pre-tensioning force modifying the curvature of the leaf (2) at which the leaf (2) can be secured by its ends to the wheel mounts (3), and removing the clamping means (16, 20, 23) from the support structure (7) of the leaf after having secured the ends of the leaf (2) to the wheel mounts (3).
